# FASCICULE DE BREVET EUROPEEN

(11) **EP 2 213 110 B1**
(45) Date de publication et mention de la délivrance du brevet: **15.03.2017**
(21) Numéro de dépôt: 08805051.3
(22) Date de dépôt: 03.10.2008
(51) Int. Cl.: H04W 4/06

(54) **DISPOSITIF ET PROCÉDÉ DE COMPTAGE DE TERMINAUX DE COMMUNICATION EFFECTIVEMENT CONNECTÉS À DES STATIONS DE BASE D'UNE ZONE MBS (MULTICAST BROADCAST SERVICE) D'UN RÉSEAU LOCAL DE COMMUNICATION SANS FIL**
VORRICHTUNG UND VERFAHREN ZUR ZÄHLUNG VON KOMMUNIKATIONSENDGERÄTEN MIT EFFEKTIVEM ANSCHLUSS AN BASISSTATIONEN IN EINEM MBS (MULTICAST BROADCAST SERVICE)-BEREICH EINES DRAHTLOSEN LOKALEN KOMMUNIKATIONSNETZWERKS
DEVICE AND METHOD FOR COUNTING COMMUNICATION TERMINALS EFFECTIVELY CONNECTED TO BASE STATIONS IN AN MBS (MULTICAST BROADCAST SERVICE) AREA OF A WIRELESS LOCAL COMMUNICATION NETWORK

(30) Priorité: 16.10.2007 FR 0758340
(43) Date de publication de la demande: 04.08.2010
(73) Titulaire: ALCATEL LUCENT, 92100 Boulogne-Billancourt (FR)
(72) Inventeur: BALAGEAS, Carine, F-91620 Nozay (FR); CONTE, Alberto, F-91620 Nozay (FR)
(74) Mandataire: Berthier, Karine
(86) Numéro de dépôt international: PCT/EP2008/063294
(87) Numéro de publication internationale: WO 2009/050047

(56) Documents cités:
- EP-A- 1 503 609
- WO-A-2005/018268
- JP-A- 2000 013 847
- US-A1- 2005 185 630
- TAO JIANG ET AL: "Multicast Broadcast Services Support in OFDMA-Based WiMAX Systems [Advances in Mobile Multimedia]" IEEE COMMUNICATIONS MAGAZINE, IEEE SERVICE CENTER, PISCATAWAY, US, vol. 45, no. 8, 1 août 2007 (2007-08-01), pages 78-86, XP011190293 ISSN: 0163-6804
- BING XU: "Access Service Network - A key network element in WiMAX System" INTERNET CITATION, [Online] XP002454883 Extrait de l'Internet: URL:http://www.conference.cn/wimax/2006/up load/YuBing.pdf> [extrait le 2007-10-12]

## Description

L'invention concerne les réseaux locaux de communication sans fil, et notamment les réseaux WiMAX, et plus précisément la diffusion (ou « broadcasting ») de données, par voie d'ondes au moyen de tels réseaux, vers des terminaux de communication disposant d'une interface de communication sans fil.

Il est rappelé que le standard WiMAX regroupe notamment les standards 802.16 et HiperMan, ainsi que toutes leurs évolutions, et notamment 802.16e dédiée aux communications sans fil avec des terminaux mobiles (ou portables).

On entend ici par « terminal de communication » tout équipement de communication fixe ou mobile (ou portable ou encore cellulaire) capable d'échanger des contenus avec un autre terminal de communication ou équipement de réseau, via un réseau local de communication sans fil. Par conséquent, il pourra par exemple s'agir d'un téléphone fixe ou mobile (ou cellulaire), d'un ordinateur fixe ou portable, d'un assistant personnel numérique (ou PDA), d'un récepteur de contenus multimédia (par exemple un décodeur, une passerelle résidentielle (ou « residential gateway ») ou un STB (« Set-Top Box »)), dès lors qu'il est équipé de moyens de communication par voie d'ondes.

Comme le sait l'homme de l'art, certains réseaux locaux de communication sans fil, et notamment ceux de type WiMAX répondant au standard 802.16e, permettent d'offrir aux terminaux (de communication) qui sont connectés à leurs réseaux d'accès un service de diffusion de données (ou contenus) appelé MBS (« Multicast and Broadcast Service »). L'article « Multicast Broadcast Services Support in OFDMA-Based WiMAX Systems » de Tao Jang et al., publié par l'oganisation IEEE dans le magazine « IEEE Communications Magazine » d'août 2007, décrit un exemple d'architecture de fourniture de services de multicast et de diffusion dans un réseau de type WiMAX.

Ce service MBS peut, dans le cas d'une diffusion de type broadcast (et non multicast), être mis en oeuvre grâce à un mode d'accès par stations de base (ou BS) multiples (ou « Multi-BS access mode ») et un regroupement de stations de base (BS) au sein de zones géographiques de type zones MBS (ou « MBS zones »). Plus précisément, dans le mode précité un même flux de service MBS peut être transmis vers des terminaux par un ensemble de stations de base qui utilisent une même paire d'informations CID (« Connection Identifier ») et SA (« Security Association ») et qui constituent ensemble une zone MBS associée à un identifiant de zone (« MBS_Zone_id ») qu'elles diffusent.

La combinaison de ce mode d'accès et de cette définition de zones MBS offre plusieurs avantages. En effet, lorsque des terminaux sont à l'intérieur d'une zone MBS, ils n'ont pas besoin de s'enregistrer auprès de chacune des stations de base de cette zone MBS. Il suffit qu'ils s'enregistrent lorsqu'ils accèdent au réseau par l'une des stations de base de ces zones MBS afin d'obtenir les paires d'informations <CID, SA> de cette zone MBS qui leur permettent ensuite d'obtenir les informations relatives aux contenus MBS diffusés localement par toutes les stations de base de cette zone MBS. Un terminal peut alors demeurer en mode d'attente (ou « idle ») tout en écoutant le trafic sur la liaison descendante (ou « downlink ») pour recevoir les contenus diffusés, permettant ainsi d'économiser de la puissance.

Cependant, la combinaison précitée introduit également certains inconvénients. En effet, à un instant donné il n'est pas possible de savoir à quelle station de base d'une zone MBS donnée est connecté un terminal et quels sont les contenus que l'utilisateur de ce terminal visionne ou écoute, par exemple. On ne connaît pas la position du terminal d'un usager dans une zone MBS. Par conséquent, chacune des stations de base d'une zone MBS diffuse en continu tous les contenus MBS de sa zone MBS même si aucun terminal n'est connecté à l'une d'entre elles, ce qui consomme inutilement des ressources radio et de l'énergie.

Le document WO 2005/018268 décrit un procédé de comptage de terminaux ayant besoin d'établir une connexion RRC dans le contexte particulier de la distribution de services MBMS dans un réseau UMTS.

La demande EP 1 503 609 divulgue par ailleurs un procédé de comptage de terminaux dans un réseau de radiocommunication cellulaire de type UMTS basé sur l'exploitation d'informations de localisation des terminaux mobiles.

L'invention a donc pour but d'améliorer la situation.

Elle propose à cet effet un dispositif de comptage (de présence) pour une zone MBS d'un réseau local de communication sans fil, comme défini dans la revendication 1.

Le dispositif selon l'invention peut comporter d'autres caractéristiques qui peuvent être prises séparément ou en combinaison, et notamment :
- il peut être chargé de collecter des informations fournies par un agent d'autorisation de flux de service de sa zone MBS, d'une première part, lorsque cet agent commence à contrôler un terminal qui entre dans sa zone MBS alors qu'il était déjà connecté au réseau ou qui se connecte au réseau par une station de base de sa zone MBS (cette dernière procédure et le comportement de l'agent d'autorisation de flux de service suivent le déroulement de la phase appelée en anglais « Network entry », qui est notamment décrite dans le document du Forum WiMAX intitulé « Network Architecture - Stage 3 - Detailed Protocols and Procedures - Release 1.0.0 standard »), d'une deuxième part, lorsque cet agent ne contrôle plus un terminal du fait qu'il a quitté sa zone MBS ou qu'il s'est déconnecté du réseau, d'une troisième part, lorsque cet agent est informé par un contrôleur de messagerie associé soit qu'un terminal quitte la zone géographique de messagerie à laquelle il est associé, soit qu'un terminal dont le contexte lui a été transféré n'a pas fait l'objet d'une mise à jour de position pendant une durée choisie, ou d'une quatrième part, lorsque cet agent détecte qu'un terminal n'a pas fait l'objet d'une mise à jour de son activité pendant une durée choisie (supérieure à celle implémentée dans le contrôleur de messagerie) ;
   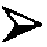 il peut être chargé d'incrémenter d'une unité la valeur d'un compteur de présence lorsqu'il reçoit d'un agent d'autorisation de flux de service de sa zone MBS des informations signalant qu'il commence à contrôler un terminal qui entre dans sa zone MBS alors qu'il était déjà connecté au réseau ou qui se connecte au réseau par une station de base de sa zone MBS, et ii) pour décrémenter d'une unité la valeur de ce compteur de présence lorsqu'il reçoit d'un agent d'autorisation de flux de service de sa zone MBS des informations signalant qu'il ne contrôle plus un terminal du fait qu'il a quitté sa zone MBS, ou qu'il s'est déconnecté du réseau, ou qu'un terminal a quitté la zone géographique de messagerie associée à un contrôleur de messagerie de sa zone MBS, ou lorsqu'un terminal dont le contexte a été transféré à un contrôleur de messagerie de sa zone MBS n'a pas fait l'objet d'une mise à jour de position pendant une durée choisie, ou encore, lorsqu'il a détecté qu'un terminal n'a pas fait l'objet d'une mise à jour de son activité pendant une durée choisie ;
      o en présence de données de trafic définissant des contenus MBS différents, il peut être chargé d'associer à chaque contenu MBS un compteur de présence dédié et d'incrémenter ou de décrémenter l'un de ces compteurs de présence lorsque les informations collectées présence.

L'invention propose également un élément de réseau, pour un réseau local de communication sans fil, équipé d'un dispositif de comptage du type de celui présenté ci-avant.

Un tel élément de réseau peut par exemple être choisi parmi (au moins) un serveur MBS, un agent d'autorisation de flux de service (SFA) et un contrôleur de messagerie.

L'invention propose également un procédé de comptage de présence, comme défini par la revendication 9.

Le procédé selon l'invention peut comporter d'autres caractéristiques qui peuvent être prises séparément ou en combinaison, et notamment :
- on peut collecter des informations fournies par un agent d'autorisation de flux de service (SFA) de la zone MBS i) lorsque cet agent commence à contrôler un terminal qui entre dans sa zone MBS alors qu'il était déjà connecté au réseau ou qui se connecte au réseau par une station de base de sa zone MBS, ii) lorsque cet agent ne contrôle plus un terminal du fait qu'il a quitté sa zone MBS ou qu'il s'est déconnecté du réseau, iii) lorsque cet agent est informé par un contrôleur de messagerie associé soit qu'un terminal quitte la zone géographique de messagerie à laquelle il est associé, soit qu'un terminal dont le contexte lui a été transféré n'a pas fait l'objet d'une mise à jour de position pendant une durée choisie, ou iv) lorsque cet agent a détecté qu'un terminal n'a pas fait l'objet d'une mise à jour de son activité pendant une durée choisie (supérieure à celle implémentée dans le contrôleur de messagerie) ;
   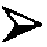 on peut incrémenter d'une unité la valeur d'un compteur de présence lorsque l'on reçoit d'un agent d'autorisation de flux de service (SFA) de la zone MBS des informations signalant que cet agent commence à contrôler un terminal qui entre dans cette zone MBS alors qu'il était déjà connecté au réseau ou qui se connecte au réseau par une station de base de la zone MBS. Dans ce cas, on décrémente d'une unité la valeur du compteur de présence lorsque l'on reçoit d'un agent d'autorisation de flux de service (SFA) de la zone MBS des informations signalant que cet agent ne contrôle plus un terminal du fait qu'il a quitté cette zone MBS ou qu'il s'est déconnecté du réseau ou qu'il n'a pas fait l'objet d'une mise à jour de son activité pendant une durée choisie, ou qu'un terminal a quitté la zone géographique de messagerie associée à un contrôleur de messagerie de sa zone MBS, ou encore lorsqu'un terminal dont le contexte a été transféré à un contrôleur de messagerie de sa zone MBS n'a pas fait l'objet d'une mise à jour de position pendant une durée choisie ;
      ∘ en présence de données de trafic définissant des contenus MBS différents, on peut associer à chaque contenu MBS un compteur de présence dédié et on peut incrémenter ou décrémenter l'un des compteurs de présence lorsque les informations collectées sont relatives à un terminal recevant ou ayant reçu les données de trafic définissant le contenu MBS associé à ce compteur de présence ;
- le serveur de service MBS peut demander aux agents d'autorisation de flux de service (AF) qui sont associés à sa zone MBS quel est le nombre de terminaux actifs et de terminaux en mode d'attente (« idle ») qu'ils gèrent, afin d'en déduire le nombre total de terminaux connectés à cette zone MBS, puis il peut ré-initialiser chaque compteur de présence en fonction du nombre total de terminaux qu'il a déterminé ;
- en variante, le serveur de service MBS peut interroger les terminaux qui sont situés dans sa zone MBS afin de les forcer à déclarer leur présence, puis il peut déduire du nombre de réponses reçues des terminaux interrogés le nombre de terminaux connectés à cette zone MBS, puis il peut ré-initialiser chaque compteur de présence en fonction du nombre de terminaux connectés qu'il a déterminé.

L'invention est particulièrement bien adaptée, bien que de façon non exclusive, aux réseaux locaux de communication sans fil de type WiMAX.

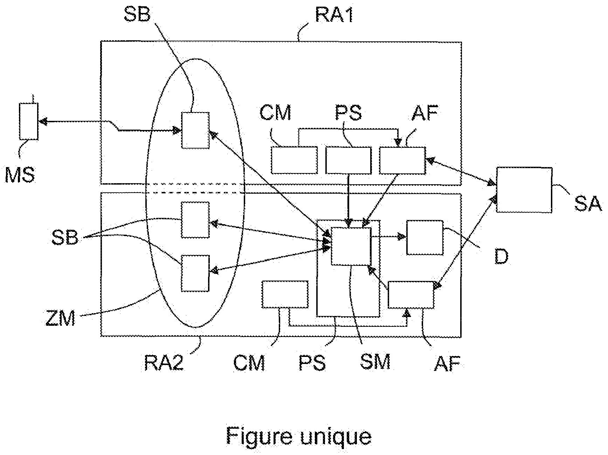

D'autres caractéristiques et avantages de l'invention apparaîtront à l'examen de la description détaillée d'après, et du dessin annexé, sur lequel l'unique figure illustre de façon très schématique une partie d'un réseau local de communication sans fil équipé d'un dispositif de comptage selon l'invention associé à une zone MBS. Le dessin annexé pourra non seulement servir à compléter l'invention, mais aussi contribuer à sa définition, le cas échéant.

L'invention a pour objet de permettre le comptage en (quasi) temps réel des terminaux de communication sans fil qui sont effectivement connectés à des stations de base d'une zone MBS d'un réseau local de communication sans fil, notamment pour contrôler la diffusion des contenus MBS dans cette zone MBS de manière à ne pas consommer inutilement des ressources radio et de l'énergie. En contrôlant la diffusion de contenus (par exemple de programmes de chaînes de télévision ou de radio), il est possible de diffuser seulement les chaînes qui intéressent des usagers. De plus, l'information relative au nombre d'utilisateurs intéressés par chaque contenu peut-être utilisée pour des services annexes aux diffuseurs de contenus, comme par exemple le calcul d'audience (ou audimat).

Dans ce qui suit, on considère à titre d'exemple non limitatif que le réseau local (de communication) sans fil est de type WiMAX (regroupement des standards 802.16 et HiperMan, notamment). Mais l'invention n'est pas limitée à ce type de réseau local sans fil. Elle concerne en effet tous les réseaux locaux de communication sans fil ou WLAN (« Wireless Local Area Network »), comme par exemple les réseaux conformes aux standards IEEE 802.11a, Wi-Fi (802.11g) et ETSI HiperLAN/2, dans lesquels sont définies des zones géographiques de type zones MBS (« Multicast and Broadcast Service ») pour la diffusion de données (ou contenus) vers des terminaux de communication grâce à un service MBS.

Par ailleurs, on considère dans ce qui suit, à titre d'exemple non limitatif, que les terminaux de communication sont des téléphones mobiles (ou cellulaires). Mais, l'invention n'est pas limitée à ce type de terminal de communication. Elle concerne en effet tout équipement de communication radio, fixe ou mobile (ou portable ou encore cellulaire), disposant d'une interface de communication sans fil et capable au moins de recevoir des données (définissant des contenus MBS, éventuellement multimédia (tels que des programmes de télévision ou de radio)) transmises par voie d'ondes. Par conséquent, il pourra également et notamment s'agir d'un ordinateur fixe ou portable, d'un assistant personnel numérique (ou PDA), ou d'un récepteur de contenus multimédia (par exemple un décodeur, une passerelle résidentielle (ou « residential gateway ») ou un STB (« Set-Top Box »)), dès lors qu'il est équipé de moyens de communication (au moins pour la réception) radio ou satellitaires.

Comme cela est schématiquement et fonctionnellement illustré sur l'unique figure, un réseau local sans fil (ici de type WiMAX), implémentant un service MBS, comprend au moins un réseau d'accès RAi, généralement appelé ASN (« Access Service Network »), couplé notamment à un serveur de type AAA (« Autorisation, Authentication, Accounting ») SA et auquel peuvent se connecter des terminaux MS. Dans l'exemple non limitatif illustré deux réseaux d'accès de type ASN RA1 et RA2 (i = 1 ou 2) ont été représentés. Mais, le réseau local sans fil pourrait comprendre plus de deux réseaux d'accès RAi.

Il est rappelé qu'un serveur de type AAA (SA) stocke notamment les profils de qualité de service (ou QoS) des usagers des terminaux MS qui sont clients de son réseau local sans fil.

Il est également rappelé qu'un réseau d'accès de type ASN RAi comprend notamment au moins une station de base SB, généralement appelée BS (« Base Station ») et par laquelle les terminaux MS peuvent se connecter au réseau local sans fil, une passerelle de service PS, généralement appelée ASN-GW (« ASN-GateWay ») et couplée à un ensemble de ses stations de base SB, ainsi qu'un agent d'autorisation de flux de service AF, généralement appelé SFA (« Service Flow Authorization ») et chargé, notamment, d'évaluer des requêtes de service qui émanent des usagers (clients) des terminaux MS en fonction de leurs profils de qualité de service respectifs qu'il récupère auprès du serveur de type AAA SA.

Il est également rappelé que l'on peut définir au moins une zone MBS ZM dans un réseau local sans fil. Chaque zone MBS ZM regroupe au moins une station de base SB qui appartient à au moins un réseau d'accès RAi. Dans l'exemple non limitatif illustré, la zone MBS ZM regroupe trois stations de base SB appartenant aux deux réseaux d'accès RA1 et RA2.

Par ailleurs, chaque zone MBS ZM est associée à un identifiant de zone (« MBS_Zone_id ») et contrôlée par un serveur de service MBS SM (ou « MBS Server »).

Les stations de base SB d'une zone MBS ZM sont notamment chargées de diffuser vers les terminaux MS l'identifiant de zone (MBS_Zone_id) de leur zone MBS ZM.

Un serveur de service MBS SM est un élément de réseau par lequel transitent toutes les données de trafic (notamment les contenus à diffuser) qui sont destinées à la zone MBS ZM qu'il contrôle et qui est couplé à chaque agent d'autorisation de flux de service AF (SFA) dont le réseau d'accès RAi comprend une station de base SB faisant partie de la zone MBS ZM qu'il contrôle. Il est notamment chargé d'attribuer à toutes les stations de base SB de la zone MBS ZM qu'il contrôle des paires d'informations CID (« Connection Identifier ») et SA (« Security Association ») (<CID,SA>). Lorsque le service MBS est mis en oeuvre grâce à un mode d'accès par stations de base multiples (ou « Multi-BS access mode »), un même flux de service MBS peut être transmis (diffusé) vers les terminaux MS par les stations de base SB d'une zone MBS qui utilisent la même paire d'informations <CID,SA>.

Dans l'exemple non limitatif illustré, le serveur de service MBS SM fait partie de la passerelle de service PS du second réseau d'accès RA2. Mais, cela n'est pas obligatoire. Le serveur de service MBS SM d'une zone MBS ZM peut en effet être un élément de réseau qui constitue ou fait partie d'un équipement de réseau qui n'est pas forcément une passerelle de service PS.

Chaque zone MBS ZM contient au moins une zone géographique de messagerie (ou « paging group ») qui est associée à un contrôleur de messagerie (ou « paging controller ») CM. Ce dernier est notamment chargé de stocker, pour chaque terminal MS qui est connecté à la zone MBS dont fait partie sa zone géographique de messagerie, sa dernière position connue, une station de base SB préférentielle et sa zone géographique de messagerie de rattachement. Dans l'exemple non limitatif illustré, chaque réseau d'accès RAi comprend son propre contrôleur de messagerie CM. Mais, cela n'est pas obligatoire. En effet, un contrôleur de messagerie CM peut en effet éventuellement opérer dans plusieurs réseaux d'accès RAi. Un contrôleur de messagerie CM possède pour un terminal MS en mode d'attente (ou « idle ») la dernière mise à jour de sa position. Comme on le verra plus loin, un contrôleur de messagerie CM informe l'agent d'autorisation de flux de service AF associé lorsqu'un terminal MS quitte la zone géographique de messagerie à laquelle il est associé, et lorsqu'un terminal MS dont le contexte lui a été transféré n'a pas fait l'objet d'une mise à jour de position pendant une durée choisie.

L'invention propose d'associer à chaque zone MBS ZM un dispositif de comptage de présence D chargé de comptabiliser en (quasi) temps réel les terminaux MS qui sont effectivement connectés aux stations de base SB de la zone MBS ZM à laquelle il est associé. Pour ce faire, chaque dispositif de comptage (de présence) D est couplé au serveur de service MBS SM de sa zone MBS ZM et à chaque agent d'autorisation de flux de service AF de sa zone MBS. Dans l'exemple non limitatif illustré, le dispositif de comptage D ne fait pas partie du serveur de service MBS SM. Mais, dans une variante (non illustrée), il pourrait en faire partie, tout comme il pourrait faire partie d'un autre type d'élément de réseau, comme par exemple un contrôleur de messagerie CM ou un agent d'autorisation de flux de service AF de sa zone MBS ZM.

Grâce à son couplage aux éléments de réseau SM et AF de sa zone MBS ZM, le dispositif de comptage D est en mesure de collecter des informations qui sont relatives aux terminaux MS qui entrent dans sa zone MBS ZM ainsi qu'aux terminaux MS qui sortent de sa zone MBS ZM, et qui sont connues des éléments de réseau SM et AF, et de déduire de ces informations collectées le nombre de terminaux MS qui sont effectivement connectés à l'une des stations de base de cette zone MBS ZM.

Les informations relatives aux terminaux MS qui entrent dans une zone MBS ZM d'un réseau local sans fil sont relativement faciles à obtenir puisque chaque fois qu'un terminal MS se connecte au réseau local sans fil (et donc entre dans ce dernier) via ladite zone MBS ZM et chaque fois qu'un terminal MS entre dans ladite zone MBS ZM alors qu'il est déjà connecté au réseau local sans fil via une autre zone MBS, un agent d'autorisation de flux de service AF de ladite zone MBS ZM en est informé et peut donc avertir le dispositif D concerné au moyen d'un message d'information spécifique (éventuellement indirectement lorsqu'il fait partie d'un autre élément de réseau).

Par exemple, le dispositif D dispose d'un compteur de présence dont il incrémente la valeur V en cours d'une unité (V → V + 1) chaque fois qu'il reçoit d'un agent d'autorisation de flux de service AF de sa zone MBS ZM un message d'information spécifique signalant qu'il vient de commencer à contrôler un terminal MS du fait qu'il est entré dans sa zone MBS ZM alors qu'il était déjà connecté au réseau local sans fil ou qu'il s'est connecté au réseau local sans fil par une station de base SB de sa zone MBS ZM.

Les informations relatives aux terminaux MS qui sortent d'une zone MBS ZM d'un réseau local sans fil sont plus difficiles à obtenir du fait que dans le contexte d'un mode d'accès par stations de base multiples (Multi-BS access mode), on perd la connaissance de la position d'un terminal MS dans une zone MBS ZM.

Certaines de ces informations de sortie peuvent être fournies par les agents d'autorisation de flux de service AF de la zone MBS ZM. En effet, lorsqu'un agent d'autorisation de flux de service AF d'une zone MBS ZM ne contrôle plus un terminal MS, du fait qu'il a quitté sa zone MBS ZM ou qu'il s'est déconnecté du réseau local sans fil, il peut avertir le dispositif D concerné au moyen d'un message d'information spécifique (éventuellement indirectement lorsqu'il fait partie d'un autre élément de réseau).

Par exemple, lorsque le dispositif D dispose du compteur de présence précité, il décrémente la valeur V en cours d'une unité (V → V - 1) chaque fois qu'il reçoit d'un agent d'autorisation de flux de service AF de sa zone MBS ZM un message d'information spécifique signalant qu'il ne contrôle plus un terminal MS. Cet agent d'autorisation de flux de service AF envoie ce message d'information spécifique soit lorsque ce terminal MS a quitté cette zone MBS ou qu'il s'est déconnecté du réseau, soit lorsqu'il est informé par le contrôleur de messagerie CM associé que ce terminal MS a quitté la zone géographique de messagerie à laquelle il est associé ou, si le contexte de ce terminal MS lui a été transféré, que ce dernier n'a pas fait l'objet d'une mise à jour de positon (ou « update location ») pendant une durée choisie (ou « timeout »). A cet effet, chaque fois qu'un contrôleur de messagerie CM reçoit une mise à jour de position pour un terminal MS, il peut par exemple déclencher une temporisation. Ainsi, s'il ne reçoit pas de mise à jour de position pour ce terminal MS pendant cette temporisation il transmet à l'agent d'autorisation de flux de service AF associé cette information, et ce dernier la retransmet au (ou en averti le) dispositif D au moyen d'un message d'information spécifique. On notera que l'agent d'autorisation de flux de service AF peut lui-même indiquer au dispositif D qu'il a détecté que le terminal MS n'a pas fait l'objet d'une mise à jour son activité pendant une durée choisie, supérieure à celle qui est implémentée dans le contrôleur de messagerie CM.

Cela permet de détecter les terminaux MS qui ont quitté « silencieusement » une zone MBS ZM sans avertir le réseau local sans fil.

On notera que les messages spécifiques générés par les éléments de réseau SM et AF pour déclencher une incrémentation de la valeur en cours du compteur de présence peuvent être tous identiques ou bien différents (et fonction du type de l'élément). De même, les messages spécifiques générés par les éléments de réseau SM et AF pour déclencher une décrémentation de la valeur en cours du compteur de présence peuvent être tous identiques ou bien différents (et fonction du type de l'élément).

Grâce au mécanisme de collection d'informations issues des éléments de réseau (SM et AF) associés à une zone MBS ZM et induisant des incrémentations et décrémentations de la valeur en cours du compteur de présence, cette dernière indique à chaque instant le nombre de terminaux MS qui sont effectivement connectés au réseau local sans fil au niveau de cette zone MBS ZM.

On notera qu'en présence de données de trafic définissant des contenus MBS différents, le dispositif D peut associer à chaque contenu MBS un compteur de présence dédié. Il gère alors en parallèle plusieurs compteurs de présence. Ainsi, le dispositif D incrémente ou décrémente l'un des compteurs de présence lorsque les informations collectées sont relatives à un terminal MS qui reçoit ou qui a reçu des données de trafic qui définissent le contenu MBS qui est associé à ce compteur de présence. Cela nécessite que chaque message d'information spécifique, relatif à un terminal MS et qui est transmis au dispositif D, contienne une information représentative du contenu MBS reçu par ce terminal MS.

On notera également que l'on peut éventuellement mettre en oeuvre, par exemple périodiquement, un mécanisme de ré-initialisation de la valeur V du (des) compteur(s) de présence. Cela peut notamment permettre d'éviter les dérives.

Pour ce faire, le serveur de service MBS SM peut par exemple demander aux agents d'autorisation de flux de service AF, qui sont associés à sa zone MBS ZM, quel est le nombre de terminaux MS actifs et de terminaux en mode d'attente (« idle ») qu'ils gèrent et donc qui sont présents dans (connectés à) cette zone MBS ZM, et déduire des nombres obtenus le nombre total de terminaux MS présents dans (connectés à) sa zone MBS ZM. En variante, le serveur de service MBS SM peut par exemple interroger les terminaux MS qui sont situés dans la zone MBS (par exemple en leur adressant des demandes (ou « queries ») conformes au protocole IGMP) afin de les forcer à déclarer leur présence, et déduire du nombre de réponses reçues le nombre total de terminaux MS présents dans (connectés à) sa zone MBS ZM. Le serveur de service MBS SM peut alors ré-initialiser le dispositif D en fonction du nombre total de terminaux MS qu'il a déterminé.

Le dispositif de comptage D selon l'invention peut être réalisé sous la forme de circuits électroniques, de modules logiciels (ou informatiques), ou d'une combinaison de circuits et de logiciels.

Il est important de noter que l'invention peut être également considérée sous l'angle d'un procédé de comptage de présence pouvant être notamment mis en oeuvre au moyen des éléments de réseau d'un réseau local sans fil, présentés ci-avant. Les fonctionnalités offertes par la mise en oeuvre du procédé selon l'invention étant identiques à celles offertes par les éléments de réseau présentés ci-avant, seule la combinaison de fonctionnalités principales offerte par le procédé est présentée ci-après.

Ce procédé de comptage de présence consiste à collecter des informations relatives aux terminaux MS, et connues des serveur de service MBS SM et agent(s) d'autorisation de flux de service AF associés à une zone MBS ZM d'un réseau local sans fil, de manière à déduire de ces informations collectées le nombre de terminaux MS qui sont effectivement présents dans (connectés à) cette zone MBS ZM.

L'invention est particulièrement avantageuse car elle permet de connaître en (quasi) temps réel le nombre de terminaux qui sont effectivement connectés à une zone MBS d'un réseau local sans fil, ce qui ne pourrait pas être le cas si l'on mettait en oeuvre une autre méthode consistant uniquement à suivre périodiquement les usagers soit en demandant aux agents d'autorisation de flux de service AF associés à une zone MBS ZM le nombre de terminaux MS actifs et de terminaux MS en mode d'attente (« idle ») qu'ils gèrent, soit en interrogeant directement (par exemple au moyen du protocole IGMP) les terminaux situés dans la zone MBS afin de les forcer à déclarer leur présence.

L'invention ne se limite pas aux modes de réalisation de dispositif de comptage, d'élément de réseau et de procédé de comptage décrits ci-avant, seulement à titre d'exemple, mais elle englobe toutes les variantes que pourra envisager l'homme de l'art dans le cadre des revendications ci-après.

## Revendications

1. Dispositif (D) de comptage de présence pour une zone, dite zone MBS, Multicast Broadcast Service (ZM) de distribution d'un service de diffusion de données ou de contenus par stations de base multiples d'un réseau local de communication sans fil i) comportant au moins un réseau d'accès (RAi), comprenant au moins un agent d'autorisation de flux de service (AF), propre à évaluer des requêtes de service émanant d'usagers de terminaux de communication (MS) en fonction de leurs profils d'usager, et au moins une station de base (SB), et ii) dans lequel est définie au moins ladite zone MBS (ZM) associée à un identifiant de zone et à un serveur de service MBS (SM) par lequel transitent toutes les données de trafic destinées à ladite zone MBS, cette dernière regroupant au moins une station de base (SB) et contenant au moins une zone géographique de messagerie associée à un contrôleur de messagerie (CM) propre à stocker, pour chaque terminal (MS) connecté à ladite zone MBS (ZM), sa dernière position connue, une station de base (SB) préférentielle et sa zone géographique de messagerie de rattachement, le dispositif de comptage étant couplé au serveur de service MBS (SM) et à chaque agent d'autorisation de flux de service (AF) de ladite zone MBS (ZM), et est agencé pour recevoir des informations relatives auxdits terminaux (MS), connues et transmises par ces serveur de service MBS (SM) et agent(s) d'autorisation de flux de service (AF), et pour déduire de ces informations reçues le nombre de terminaux (MS) effectivement présents dans ladite zone MBS (ZM).

2. Dispositif selon la revendication 1, agencé pour recevoir des informations fournies par chaque agent d'autorisation de flux de service (AF) de sa zone MBS (ZM) i) lorsqu'il commence à contrôler un terminal (MS) qui entre dans sa zone MBS (ZM) alors qu'il était déjà connecté audit réseau ou qui se connecte audit réseau par une station de base (SB) de sa zone MBS (ZM), ii) lorsqu'il ne contrôle plus un terminal (MS) du fait qu'il a quitté sa zone MBS (ZM) ou qu'il s'est déconnecté dudit réseau, iii) lorsqu'il est informé par un contrôleur de messagerie (CM) associé soit qu'un terminal (MS) quitte la zone géographique de messagerie à laquelle il est associé, soit qu'un terminal (MS) dont le contexte lui a été transféré n'a pas fait l'objet d'une mise à jour de position pendant une durée choisie, ou iv) lorsqu'il détecte qu'un terminal n'a pas fait l'objet d'une mise à jour de son activité pendant une durée choisie.

3. Dispositif selon la revendication 2, agencé i) pour incrémenter d'une unité la valeur d'un compteur de présence lorsqu'il reçoit d'un agent d'autorisation de flux de service (AF) de sa zone MBS (ZM) des informations signalant qu'il commence à contrôler un terminal (MS) qui entre dans sa zone MBS (ZM) alors qu'il était déjà connecté audit réseau ou qui se connecte audit réseau par une station de base (SB) de sa zone MBS (ZM), et ii) pour décrémenter d'une unité la valeur dudit compteur de présence lorsqu'il reçoit d'un agent d'autorisation de flux de service (AF) de sa zone MBS (ZM) des informations signalant qu'il ne contrôle plus un terminal (MS) du fait qu'il a quitté sa zone MBS (ZM) ou qu'il s'est déconnecté dudit réseau ou qu'un terminal (MS) a quitté la zone géographique de messagerie associée à un contrôleur de messagerie (CM) de sa zone MBS (ZM), ou qu'un terminal (MS) dont le contexte a été transféré à un contrôleur de messagerie (CM) de sa zone MBS (ZM) n'a pas fait l'objet d'une mise à jour de position pendant une durée choisie, ou encore lorsqu'il a détecté qu'un terminal (MS) n'a pas fait l'objet d'une mise à jour de son activité pendant une durée choisie.

4. Dispositif selon la revendication 3, agencé pour, en présence de données de trafic définissant des contenus MBS différents, associer à chaque contenu MBS un compteur de présence dédié et pour incrémenter ou décrémenter l'un desdits compteurs de présence lorsque les informations collectées sont relatives à un terminal (MS) recevant ou ayant reçu les données de trafic définissant le contenu MBS associé à ce compteur de présence.

5. Dispositif selon l'une des revendications 1 à 4, propre à être ré-initialisé en fonction d'instructions issues dudit serveur de service MBS (SM) et relatives au nombre total de terminaux (MS) actifs et de terminaux (MS) en mode d'attente obtenus auprès desdits agents d'autorisation de flux de service (AF).

6. Dispositif selon l'une des revendications 1 à 4, propre à être ré-initialisé en fonction d'instructions issues dudit serveur de service MBS (SM) et relatives au nombre total de terminaux (MS) connectés qu'il a déduit de réponses transmises par ces derniers consécutivement à la réception de demandes les forçant à déclarer leur présence.

7. Elément de réseau (SM, AF, CM) pour un réseau local de communication sans fil, comprenant un dispositif de comptage (D) selon l'une des revendications précédentes.

8. Elément de réseau selon la revendication 7, choisi dans un groupe comprenant au moins un serveur de service MBS (SM), un agent d'autorisation de flux de service (AF) et un contrôleur de messagerie (CM).

9. Procédé de comptage de présence pour une zone, dite zone MBS, Multicast Broadcast Service (ZM) de distribution d'un service de diffusion de données ou de contenus par stations de base multiples d'un réseau local de communication sans fil i) comportant au moins un réseau d'accès (RAi), comprenant au moins un agent d'autorisation de flux de service (AF), propre à évaluer des requêtes de service émanant d'usagers de terminaux de communication (MS) en fonction de leurs profils d'usager, et au moins une station de base (SB), et ii) dans lequel est définie au moins ladite zone MBS (ZM) associée à un identifiant de zone et à un serveur de service MBS (SM) par lequel transitent toutes les données de trafic destinées à ladite zone MBS (ZM), cette dernière regroupant au moins une station de base (SB) et contenant au moins une zone géographique de messagerie associée à un contrôleur de messagerie (CM) propre à stocker, pour chaque terminal (MS) connecté à ladite zone MBS (ZM), sa dernière position connue, une station de base (SB) préférentielle et sa zone géographique de messagerie de rattachement, le procédé consistant à recevoir des informations relatives auxdits terminaux (MS), connues et transmises par lesdits serveur de service MBS (SM) et agent(s) d'autorisation de flux de service (AF) de ladite zone MBS (ZM), et de déduire de ces informations collectées le nombre de terminaux (MS) effectivement présents dans ladite zone MBS.

10. Procédé selon la revendication 9, dans lequel on reçoit des informations fournies par chaque agent d'autorisation de flux de service (AF) de ladite zone MBS (ZM) i) lorsque ledit agent (AF) commence à contrôler un terminal (MS) qui entre dans sa zone MBS (ZM) alors qu'il était déjà connecté audit réseau ou qui se connecte audit réseau par une station de base (SB) de sa zone MBS (ZM), ii) lorsque ledit agent (AF) ne contrôle plus un terminal (MS) du fait qu'il a quitté sa zone MBS (ZM) ou qu'il s'est déconnecté dudit réseau, iii) lorsque ledit agent (AF) est informé par un contrôleur de messagerie (CM) associé soit qu'un terminal (MS) quitte la zone géographique de messagerie à laquelle il est associé, soit qu'un terminal (MS) dont le contexte lui a été transféré n'a pas fait l'objet d'une mise à jour de position pendant une durée choisie, ou iv) lorsque ledit agent (AF) détecte qu'un terminal (MS) qu'il contrôle n'a pas fait l'objet d'une mise à jour de son activité pendant une durée choisie.

11. Procédé selon la revendication 10, dans lequel i) on incrémente d'une unité la valeur d'un compteur de présence lorsque l'on reçoit d'un agent d'autorisation de flux de service (AF) de ladite zone MBS (ZM) des informations signalant que cet agent (AF) commence à contrôler un terminal (MS) qui entre dans ladite zone MBS (ZM) alors qu'il était déjà connecté audit réseau ou qui se connecte audit réseau par une station de base (SB) de ladite zone MBS (ZM), et ii) on décrémente d'une unité la valeur dudit compteur de présence lorsque l'on reçoit d'un agent d'autorisation de flux de service (AF) de ladite zone MBS (ZM) des informations signalant que cet agent (AF) ne contrôle plus un terminal (MS) du fait qu'il a quitté ladite zone MBS (ZM) ou qu'il s'est déconnecté dudit réseau ou qu'il n'a pas fait l'objet d'une mise à jour de son activité pendant une durée choisie, ou qu'un terminal (MS) a quitté la zone géographique de messagerie associée à un contrôleur de messagerie (CM) de sa zone MBS (ZM), ou encore lorsqu'un terminal (MS) dont le contexte a été transféré à un contrôleur de messagerie (CM) de sa zone MBS (ZM) n'a pas fait l'objet d'une mise à jour de position pendant une durée choisie.

12. Procédé selon la revendication 11, dans lequel, en présence de données de trafic définissant des contenus MBS différents, on associe à chaque contenu MBS un compteur de présence dédié et on incrémente ou décrémente l'un desdits compteurs de présence lorsque les informations collectées sont relatives à un terminal (MS) recevant ou ayant reçu les données de trafic définissant le contenu MBS associé à ce compteur de présence.

13. Procédé selon l'une des revendications 9 à 12, dans lequel ledit serveur de service MBS (SM) demande auxdits agents d'autorisation de flux de service (AF), qui sont associés à sa zone MBS (ZM), quel est le nombre de terminaux (MS) actifs et de terminaux (MS) en mode d'attente qu'ils gèrent, afin d'en déduire le nombre total de terminaux connectés à cette zone MBS (ZM), puis il ré-initialise chaque compteur de présence en fonction dudit nombre total de terminaux (MS) qu'il a déterminé.

14. Procédé selon l'une des revendications 9 à 12, dans lequel ledit serveur de service MBS (SM) interroge les terminaux (MS) qui sont situés dans sa zone MBS (ZM) afin de les forcer à déclarer leur présence, puis il déduit du nombre de réponses reçues desdits terminaux (MS) interrogés le nombre total de terminaux (MS) connectés à ladite zone MBS (ZM), puis il ré-initialise chaque compteur de présence en fonction dudit nombre total de terminaux (MS) qu'il a déterminé.

## Patentansprüche

1. Vorrichtung (Dispositif, D) zur Präsenzzählung für eine Zone, wobei besagte MBS-Zone (Zone Multicast Broadcast Service, ZM) zur Verbreitung eines Dienstes zum Senden von Daten oder Inhalten für multiple Basisstationen eines drahtlosen lokalen Kommunikationsnetzwerks i) mindestens ein Zugangsnetz (Reseau d'Acces, RAi) umfasst, welches einerseits mindestens ein Autorisierungsmittel für Dienstströme (Autorisation de Flux, AF) umfasst, das ausgelegt ist für das Evaluieren von Dienstanforderungen, die von Benutzern von Kommunikationsendgeräten (MS) eingehen, in Funktion von deren Benutzerprofilen, und welches weiterhin mindestens eine Basisstation (Station de Base, SB) umfasst, und wobei ii) mindestens besagte MBS-Zone (ZM) definiert wird, die mit einer Zonenkennung und einem MBS-Dienstserver (SM) assoziiert ist, über den alle Daten des für besagte MBS-Zone bestimmten Datenverkehrs laufen, wobei besagte MBS-Zone mindestens eine Basisstation (SB) enthält und mindestens eine geografische Messagingzone umfasst, die mit einer eigenen Messagingsteuerung (Contrôleur de Messagerie, CM) assoziiert ist, um für jedes mit besagter MBS-Zone (ZM) verbundene Endgerät (MS) dessen letzte bekannte Position, eine präferentielle Basisstation (SB) und deren angegliederte geografische Messagingzone zu speichern, wobei die Zählvorrichtung an den MBS-Dienstserver (SM) und an jedes Autorisierungsmittel für Dienstströme (AF) besagter MBS-Zone (ZM) gekoppelt und dafür ausgelegt ist, Informationen zu besagten bekannten Endgeräten (MS) zu empfangen, die über besagte MBS-Dienstserver (SM) und Autorisierungsmittel für Dienstströme (AF) übermittelt werden, sowie weiterhin dafür ausgelegt, um aus besagten empfangenen Informationen die Anzahl der Endgeräte (MS) abzuleiten, die tatsächlich in besagter MBS-Zone (ZM) präsent sind.

2. Vorrichtung nach Anspruch 1, ausgelegt für den Empfang von Informationen, die von jedem der Autorisierungsmittel für Dienstströme (AF) ihrer MBS-Zone (ZM) dann geliefert werden, i) wenn besagte Vorrichtung mit der Überprüfung eines Endgeräts (MS) beginnt, das in ihre MBS-Zone (ZM) eingetreten ist, als sie bereits mit besagtem Netz verbunden war, oder das sich mit besagtem Netz über eine Basisstation (SB) ihrer MBS-Zone (ZM) verbindet, oder dann, ii) wenn besagte Vorrichtung die Kontrolle eines Endgerät (MS) einstellt, weil dieses ihre MBS-Zone (ZM) verlässt oder sich bei besagtem Netz abgemeldet hat, oder dann, iii) wenn besagte Vorrichtung von einer assoziierten Messagingsteuerung (Contrôleur de Messagerie, CM) informiert wird, dass ein Endgerät (MS) entweder die geografische Messagingzone verlassen hat, mit der die Vorrichtung assoziiert ist, oder dass zu einem Endgerät (MS), zu dem ihr Kontextinformationen übermittelt wurden, im Verlauf eines vorgegebenen Zeitraums keine Aktualisierung seiner Position vorgenommen wurde, oder dann, iv) wenn besagte Vorrichtung feststellt, dass zu einem Endgerät im Verlauf eines vorgegebenen Zeitraums keine Aktualisierung seiner Aktivität vorgenommen wurde.

3. Vorrichtung nach Anspruch 2, ausgelegt i) für das Erhöhen eines Zählerstands eines Präsenzzählers um eine Einheit dann, wenn sie von einem Autorisierungsmittel für Dienstströme (AF) ihrer MBS-Zone (ZM) Informationen empfängt, die ihr signalisieren, dass sie mit der Kontrolle eines Endgeräts (MS) beginnt, das in ihre MBS-Zone (ZM) eintritt, wenn es bereits mit besagtem Netz verbunden ist, oder das sich mit besagtem Netz über eine Basisstation (SB) ihrer MBS-Zone (ZM) verbindet, und ii) für das Verringern des Zählerstands besagten Präsenzzählers um eine Einheit dann, wenn besagte Vorrichtung von einem Autorisierungsmittel für Dienstströme (AF) ihrer MBS-Zone (ZM) Informationen empfängt, die ihr signalisieren, dass sie die Kontrolle eines Endgeräts (MS) einstellt, weil dieses entweder ihre MBS-Zone (ZM) verlassen, die Verbindung mit besagtem Netz beendet oder ein Endgerät (MS) die geografische Messagingzone verlassen hat, die mit einer Messagingsteuerung (CM) ihrer MBS-Zone (ZM) assoziiert ist, oder dann, wenn zu einem Endgerät (MS), zu dem Kontextinformationen an eine Messagingsteuerung (CM) in seiner MBS-Zone (ZM) übermittelt wurden, im Verlauf eines vorgegebenen Zeitraums keine Aktualisierung seiner Position vorgenommen wurde, oder schließlich dann, wenn besagte Vorrichtung feststellt, dass zu einem Endgerät (MS) im Verlauf eines vorgegebenen Zeitraums keine Aktualisierung seiner Aktivität vorgenommen wurde.

4. Vorrichtung nach Anspruch 3, dafür ausgelegt, um beim Vorliegen von Verkehrsdaten, die verschiedene MBS-Inhalte definieren, jedem MBS-Inhalt einen dedizierten Präsenzzähler zuzuweisen, sowie dafür ausgelegt, um den Zählerstand eines der besagten Präsenzzähler dann zu erhöhen oder zu verringern, wenn die gesammelten Informationen sich auf ein Endgerät (MS) beziehen, welches Verkehrsdaten empfängt oder empfangen hat, die den MBS-Inhalt definieren, der mit dem betreffenden Präsenzzähler assoziiert ist.

5. Vorrichtung nach einem jeglichen der Ansprüche 1 bis 4, ausgelegt dafür, um in Funktion von Anweisungen zurückgesetzt zu werden, die von besagtem MBS-Dienstserver (SM) ausgegeben werden und sich auf die Gesamtzahl der aktiven Endgeräte (MS) und der im Wartezustand befindlichen Endgeräte (MS) beziehen, die bei den Autorisierungsmitteln für Dienstströme (AF) ermittelt wurden.

6. Vorrichtung nach einem jeglichen der Ansprüche 1 bis 4, ausgelegt dafür, um in Funktion von Anweisungen zurückgesetzt zu werden, die von besagtem MBS-Dienstserver (SM) ausgegeben werden und sich auf die Gesamtzahl der verbundenen Endgeräte (MS) beziehen, welche die Vorrichtung aus den Antworten abgeleitet hat, die besagte verbundene Endgeräte im Anschluss an den Empfang der Anforderung gesendet haben, durch welche sie veranlasst wurden, ihre Präsenz anzuzeigen.

7. Netzwerkelement (SM, AF, CM) für ein drahtloses lokales Kommunikationsnetzwerk, eine Zählvorrichtung (D) nach einem jeglichen der vorgenannten Ansprüche umfassend.

8. Netzwerkelement nach Anspruch 7, ausgewählt aus einer Gruppe, die mindestens einen MBS-Dienstserver (SM), ein Autorisierungsmittel für Dienstströme (AF) und eine Messagingsteuerung (CM) umfasst.

9. Verfahren zur Präsenzzählung in einer Zone, wobei besagte MBS-Zone (ZM) zur Verbreitung eines Dienstes zum Senden von Daten oder Inhalten für multiple Basisstationen eines drahtlosen lokalen Kommunikationsnetzwerks i) mindestens ein Zugangsnetz (RAi) umfasst, welches einerseits mindestens ein Autorisierungsmittel für Dienstströme (AF) umfasst, das ausgelegt ist für das Evaluieren von Dienstanforderungen, die von Benutzern von Kommunikationsendgeräten (MS) eingehen, in Funktion von deren Benutzerprofilen, und welches weiterhin mindestens eine Basisstation (SB) umfasst, und wobei ii) mindestens besagte MBS-Zone (ZM) definiert wird, die mit einer Zonenkennung und einem MBS-Dienstserver (SM) assoziiert ist, über den alle Daten des für besagte MBS-Zone (ZM) bestimmten Datenverkehrs laufen, wobei besagte MBS-Zone mindestens eine Basisstation (SB) enthält und mindestens eine geografische Messagingzone umfasst, die mit einer eigenen Messagingsteuerung (CM) assoziiert ist, um für jedes mit besagter MBS-Zone (ZM) verbundene Endgerät (MS) dessen letzte bekannte Position, eine präferentielle Basisstation (SB) und deren angegliederte geografische Messagingzone zu speichern, wobei das Verfahren darin besteht, Informationen zu besagten Endgeräten (MS) zu empfangen, die von besagtem MBS-Dienstserver (SM) und besagten Autorisierungsmitteln für Dienstströme (AF) besagter MBS-Zone (ZM) übermittelt wurden, sowie darin, um aus besagten empfangenen Informationen die Anzahl der Endgeräte (MS) abzuleiten, die tatsächlich in besagter MBS-Zone präsent sind.

10. Verfahren nach Anspruch 9, wobei der Empfang von Informationen, die von jedem der Autorisierungsmittel für Dienstströme (AF) besagter MBS-Zone (ZM) geliefert werden, dann erfolgt, i) wenn besagtes Mittel (AF) mit der Kontrolle eines Endgeräts (MS) beginnt, das in seine MBS-Zone (ZM) eintritt, als es bereits mit besagtem Netz verbunden war, oder das sich mit besagtem Netz über eine Basisstation (SB) der zugehörigen MBS-Zone (ZM) verbindet, oder dann, ii) wenn besagte Vorrichtung (AF) die Kontrolle eines Endgerät (MS) einstellt, weil dieses seine MBS-Zone (ZM) verlässt oder sich bei besagtem Netz abgemeldet hat, oder dann, iii) wenn besagtes Mittel (AF) von einer assoziierten Messagingsteuerung (CM) informiert wird, dass ein Endgerät (MS) entweder die geografische Messagingzone verlassen hat, mit der das Mittel assoziiert ist, oder dass zu einem Endgerät (MS), zu dem ihm Kontextinformationen übermittelt wurden, im Verlauf eines vorgegebenen Zeitraums keine Aktualisierung seiner Position vorgenommen wurde, oder dann, iv) wenn besagtes Mittel (AF) feststellt, dass zu einem von ihm kontrollierten Endgerät (MS) im Verlauf eines vorgegebenen Zeitraums keine Aktualisierung seiner Aktivität vorgenommen wurde.

11. Verfahren nach Anspruch 10, wobei i) ein Zählerstand eines Präsenzzählers dann um eine Einheit erhöht wird, wenn von einem Autorisierungsmittel für Dienstströme (AF) besagter MBS-Zone (ZM) Informationen empfangen werden, die signalisieren, dass besagtes Mittel (AF) mit der Kontrolle eines Endgeräts (MS) beginnt, das in besagte MBS-Zone (ZM) eintritt, wenn es bereits mit besagtem Netz verbunden war, oder das sich mit besagtem Netz über eine Basisstation (SB) besagter MBS-Zone (ZM) verbindet, und ii) wobei der Zählerstand besagten Präsenzzählers dann um eine Einheit verringert wird, wenn von einem Autorisierungsmittel für Dienstströme (AF) besagter MBS-Zone (ZM) Informationen empfangen werden, die signalisieren, dass besagtes Mittel (AF) die Kontrolle eines Endgeräts (MS) eingestellt hat, weil dieses entweder seine MBS-Zone (ZM) verlassen hat oder die Verbindung mit besagtem Netz beendet hat, oder weil im Verlauf eines vorgegebenen Zeitraums keine Aktualisierung seiner Aktivität stattgefunden hat, oder weil ein Endgerät (MS) die geografische Messagingzone verlassen hat, die mit einer Messagingsteuerung (CM) seiner MBS-Zone (ZM) assoziiert ist, oder dann, wenn zu einem Endgerät (MS), zu dem einer Messagingsteuerung (CM) der zugehörigen MBS-Zone (ZM) Kontextinformationen übermittelt wurden, im Verlauf eines vorgegebenen Zeitraums keine Aktualisierung seiner Position vorgenommen wurde.

12. Verfahren nach Anspruch 11, wobei beim Vorliegen von Verkehrsdaten, die verschiedene MBS-Inhalte definieren, jedem MBS-Inhalt ein dedizierter Präsenzzähler zugewiesen wird, und wobei der Zählerstand eines der besagten Präsenzzähler dann erhöht oder zu verringert wird, wenn die gesammelten Informationen sich auf ein Endgerät (MS) beziehen, welches Verkehrsdaten empfängt oder empfangen hat, die den MBS-Inhalt definieren, der mit dem betreffenden Präsenzzähler assoziiert ist.

13. Verfahren nach einem der Ansprüche 9 bis 12, wobei besagter MBS-Dienstserver (SM) bei besagten Autorisierungsmitteln für Dienstströme (AF), die mit seiner MBS-Zone (ZM) assoziiert sind, die Zahl der aktiven Endgeräte (MS) und die Zahl der Endgeräte (MS) im Wartemodus abfragt, die von ihnen abhängen, um die Gesamtzahl der mit besagter MBS-Zone (ZM) verbundenen Endgeräte abzuleiten, woraufhin besagter Server jeden Präsenzzähler in Funktion der besagten, von ihm bestimmten Gesamtzahl der Endgeräte (MS) zurücksetzt.

14. Verfahren nach einem der Ansprüche 9 bis 12, wobei besagter MBS-Dienstserver (SM) an die Endgeräte (MS), die sich in seiner MBS-Zone (ZM) befinden, Anfragen richtet, um sie dazu zu veranlassen, ihre Präsenz mitzuteilen, woraufhin besagter Server von der Zahl der von besagten, abgefragten Endgeräten (MS) erhaltenen Antworten die Gesamtzahl der Endgeräte (MS) ableitet, die mit besagter MBS-Zone (ZM) verbunden sind, woraufhin er jeden Präsenzzähler in Funktion besagter Gesamtzahl der von ihm bestimmten Endgeräte (MS) zurücksetzt.

## Claims

1. A presence counting device (D) for a zone called an MBS or Multicast Broadcast Service zone (ZM), for distributing a data or content broadcasting service via multiple base stations of a wireless local communication network i) including at least one access network (RAi), comprising at least one service flow authorization agent (AF), able to evaluate service requests coming from users of communication terminals (MS) based on their user profiles, and at least one base station (SB), and ii) in which is defined at least one MBS zone (ZM) associated with a zone identifier and with an MBS service server (SM) through which all of the traffic data intended for said MBS zone travels, said zone encompassing at least one base station (SB) and containing at least one geographic messaging zone associated with a messaging controller (CM) able to store, for each terminal (MS) connected to said MBS zone (ZM), its last known position, a preferential base station (SB) and its assigned geographic messaging zone, the counting device being coupled to the MBS service server (SM) and to each service flow authorization agent (AF) of said MBS zone (ZM), and is arranged to receive information related to said terminals (MS) known and transmitted by those MBS service servers (SM) and service flow authorization agents (AF), and to deduce from that received the number of terminals (MS) actually present in said MBS zone (ZM).

2. A device according to claim 1, arranged to receive information provided by each service flow authorization agent (AF) of its MBS zone (ZM) i) when it starts to control a terminal (MS) that enters into its MBS zone (ZM) which was already connected to said network or connects to said network by a base station (SB) of its MBS zone (ZM), ii) when it no longer controls a terminal (MS) due to its having left its MBS zone (ZM) or having disconnected from said network, iii) when it is informed by an associated messaging controller (CM) either that a terminal (MS) has left the geographic messaging zone with which it is associated, or that a terminal (MS) whose context was transferred to it has not had a position update for a chosen period of time, or iv) whenever it detects that a terminal has not has its activity updated for a chosen period of time.

3. A device according to claim 2, arranged i) to increment by one unit the value of a presence counter when it receives from a service flow authorization agent (AF) of its MBS zone information reporting that it has started to control a terminal (MS) that enters its MBS zone (ZM) which was already connected to said network or connects to said network by a base station (SB) of its MBS zone (ZM), and ii) to decrement by one unit the value of said presence counter when it receives from a service flow authorization agent (AF) of its MBS zone information reporting that it is no longer controlling a terminal (MS) due to its having left its MBS zone (ZM) or having disconnected from said network or that a terminal (MS) has left the geographic messaging zone associated with a messaging controller (CM) of its MBS zone (ZM), or that a terminal (MS) whose context has been transferred to a messaging controller (CM) of its MBS zone (ZM) has not had a position update for a chosen period of time, or whenever it has detected that a terminal has not has its activity updated for a chosen period of time.

4. A device according to claim 3, arranged to, in the presence of traffic data defining different MBS content, associating each piece of MBS content with a dedicated presence counter and to increment or decrement one of said presence counters when the collected information relates to a terminal (MS) receiving or having received the traffic data defining the MBS content associated with that presence counter.

5. A device according to one of the claims 1 to 4, capable of being reset based on instructions from said MBS service server (SM) and relating to the total number of active terminals (MS) and terminals (MS) in wait mode obtained from said service flow authorization agents (AF).

6. A device according to one of the claims 1 to 4, capable of being reset based on instructions from said MBS service server (SM) and relating to the total number of connected terminals (MS) that it has deduced from the responses they transmitted subsequent to receiving requests forcing them to declare their presence.

7. A network element (SM, AF, CM) for a wireless local communication network, comprising a counting device (D) according to any of the preceding claims.

8. A network element according to claim 7, chosen from a group comprising at least one MBS service server (SM), a service flow authorization agent (AF), and a messaging controller (CM).

9. A presence counting method for a zone called an MBS or Multicast Broadcast Service zone (ZM), for distributing a data or content broadcasting service via multiple base stations of a wireless local communication network, i) including at least one access network (RAi), comprising at least one service flow authorization agent (AF), able to evaluate service requests coming from users of communication terminals (MS) based on their user profiles, and at least one base station (SB), and ii) in which is defined at least one MBS zone (ZM) associated with a zone identifier and with an MBS service server (SM) through which all of the traffic data intended for said MBS zone travels, said zone encompassing at least one base station (SB) and containing at least one geographic messaging zone associated with a messaging controller (CM) able to store, for each terminal (MS) connected to said MBS zone (ZM), its last known position, a preferential base station (SB) and its assigned geographic messaging zone, the method consisting of receiving information about said terminals (MS) known and transmitted by said MBS service server (SM) and one service flow authorization agent(s) (AF), of said MBS zone (ZM), and deducing from that collected information the number of terminals (MS) actually present in said MBS zone.

10. A method according to claim 9, wherein information provided by each one service flow authorization agent (AF) is received i) when said agent (AF) begins to control a terminal (MS) that enters into its MBS zone (ZM) which was already connected to said network or connects to said network by a base station (SB) of its MBS zone (ZM), ii) when said agent no longer controls a terminal (MS) due to its having left its MBS zone (ZM) or having disconnected from said network, iii) when said agent (AF) is informed by an associated messaging controller (CM) either that a terminal (MS) has left the geographic messaging zone with which it is associated, or that a terminal (MS) whose context was transferred to it has not had a position update for a chosen period of time, or iv) whenever it detects that a terminal has not has its activity updated for a chosen period of time.

11. A method according to claim 10, wherein i) the value of a presence counter is incremented by one unit when it receives from a service flow authorization agent (AF) of said MBS zone information reporting that said agent has started to control a terminal (MS) that enters said MBS zone (ZM) which was already connected to said network or connects to said network by a base station (SB) of said MBS zone (ZM), and ii) the value of said presence counter is decremented by one unit when it receives from a service flow authorization agent (AF) of said MBS zone information reporting that said agent is no longer controlling a terminal (MS) due to its having left said MBS zone (ZM) or having disconnected from said network or that it has not had its activity updated for a chosen period of time, or that a terminal (MS) has left the geographic messaging zone associated with a messaging controller (CM) of its MBS zone (ZM), or that a terminal (MS) whose context has been transferred to a messaging controller (CM) of its MBS zone (ZM) has not had a position update for a chosen period of time.

12. A method according to claim 11, wherein, in the presence of traffic data defining different MBS content, each piece of MBS content is associated with a dedicated presence counter and one of said presence counters is incremented or decremented when the collected information relates to a terminal (MS) receiving or having received the traffic data defining the MBS content associated with that presence counter.

13. A method according to one of the claims 9 to 12, wherein said MBS service server (SM) asks said service flow authorization agents (AF), which are associated with its MBS zone (ZM), how many active terminals (MS) and terminals in wait mode (MS) they are managing, in order to deduce therefrom the total number of terminals connected to that MBS zone (ZM), then it resets each presence counter based on said total number of terminals (MS) it has determined.

14. A method according to one of the claims 9 to 12, wherein said MBS service server (SM) queries the terminals (MS) which are located in its MBS zone (ZM) in order to force them to declare their presence, then it deduces from the number of responses received from said queried terminals (MS) the total number of terminals (MS) connected to said MBS zone (ZM), then it resets each presence counter based on said total number of terminals (MS) that it has determined.
